# FASCICULE DE BREVET EUROPEEN

(11) **EP 2 622 200 B1**
(45) Date de publication et mention de la délivrance du brevet: **16.03.2016**
(21) Numéro de dépôt: 11751559.3
(22) Date de dépôt: 28.07.2011
(51) Int. Cl.: F02M 35/112, F02B 29/04, F02M 35/104, F02M 35/10, F02M 26/00

(54) **DISPOSITIF DE MELANGE D'UN FLUX DE GAZ D'ADMISSION ET D'ECHAPPEMENT RECIRCULES COMPRENANT DES MOYENS D'ISOLATION POUR LES GAZ D'ECHAPPEMENT RECIRCULES**
VORRICHTUNG ZUM MISCHEN EINES STROMS AUS EINTRITTSGASEN UND RÜCKGEFÜHRTEN ABGASEN MIT ISOLIERVORRICHTUNG FÜR DIE RÜCKGEFÜHRTEN ABGASE
DEVICE FOR MIXING A STREAM OF INLET GASES AND OF RECIRCULATED EXHAUST GASES COMPRISING INSULATING MEANS FOR THE RECIRCULATED EXHAUST GASES

(30) Priorité: 27.09.2010 FR 1003814
(43) Date de publication de la demande: 07.08.2013
(73) Titulaire: Valeo Systemes Thermiques, 78320 Le Mesnil Saint Denis (FR)
(72) Inventeur: ODILLARD, Laurent, 72390 Le Luart (FR); DEVEDEUX, Sébastien, F-78000 Versailles (FR); GALLAND, Jean-Pierre, F-78690 Les Essarts-le-roi (FR); BURGOLD, Sven, F-78120 Rambouillet (FR)
(74) Mandataire: Metz, Gaëlle
(86) Numéro de dépôt international: PCT/EP2011/063034
(87) Numéro de publication internationale: WO 2012/041563

(56) Documents cités:
- EP-A1- 2 014 906
- EP-A2- 1 510 684
- EP-A2- 1 522 714
- JP-A- 2001 123 901
- US-A- 4 249 382
- US-A- 4 445 487
- US-B2- 6 422 221

## Description

L'invention concerne le domaine général de l'alimentation en air des moteurs de véhicules automobiles, et plus particulièrement des moteurs dont l'air d'alimentation provient d'un compresseur ou d'un turbocompresseur.

Un moteur thermique de véhicule automobile comporte une chambre de combustion, généralement formée par une pluralité de cylindres, dans laquelle un mélange de comburant et de carburant est brûlé pour générer le travail du moteur. Les gaz admis dans la chambre de combustion sont dénommés gaz d'admission. Ils comportent de l'air que l'on nomme air de suralimentation lorsqu'il provient d'un compresseur.

Afin d'augmenter la densité de l'air de suralimentation, ces gaz sont généralement refroidis avant d'être introduits dans la chambre de combustion; cette fonction est remplie par un échangeur de chaleur, également appelé refroidisseur d'air de suralimentation (« RAS »).

Un refroidisseur d'air de suralimentation pouvant être utilisé dans le cadre de l'invention comporte au moins un faisceau d'échange de chaleur. Ce faisceau d'échange de chaleur peut comporter des tubes parallèles ou un empilement de plaques formant alternativement des canaux de circulation pour l'air suralimenté à refroidir et des canaux pour la circulation du liquide de refroidissement moteur. L'échange de chaleur entre les tubes ou les plaques et l'air de suralimentation se fait en partie par l'intermédiaire de turbulateurs. Cet échangeur peut avoir la particularité d'être intégré dans le collecteur d'admission du moteur à combustion interne.

Afin de réduire les émissions polluantes, il est connu d'introduire dans le flux de gaz d'admission, des gaz d'échappement dit "recirculés" (connus de l'homme du métier sous son abréviation anglaise « EGR » correspondant à « Exhaust Gas recirculation »). Il s'agit de gaz d'échappement prélevés en aval de la chambre de combustion pour être réacheminés (recirculés) vers le flux de gaz d'admission, en amont de la chambre de combustion, où ils sont mélangés à l'air de suralimentation en vue de leur admission dans la chambre de combustion. Traditionnellement, les gaz d'échappement recirculés sont introduits via un ou plusieurs points d'injection ménagés dans une canalisation d'admission des gaz s'étendant entre le refroidisseur des gaz d'admission et le moteur, afin que les gaz d'échappement recirculés se mélangent avec les gaz provenant du refroidisseur.

Actuellement, on cherche à rapprocher au maximum l'échangeur de chaleur du moteur pour gagner en compacité.

Lorsque la distance entre le refroidisseur d'air de suralimentation et l'entrée des conduits d'admission est trop faible pour assurer un mélange homogène entre les gaz du RAS et les gaz EGR, ces derniers sont introduits dans le collecteur d'admission par l'intermédiaire d'un canal transversal à l'écoulement de l'air de suralimentation, débouchant en aval du RAS par une succession de trous. Le canal est balayé par le flux froid d'air de suralimentation.

La dispersion de la température cylindre à cylindre peut alors être très importante lorsque les gaz EGR sont refroidis de manière hétérogène par l'air en provenance du RAS. C'est notamment le cas au niveau du canal puisque le gaz qui traverse tout le canal avant l'injection est plus refroidi que le gaz qui est injecté dès le premier trou d'injection. Cela complique la gestion du moteur à combustion interne et rend plus délicat, voire impossible, le contrôle de la combustion pour chaque cylindre.

US 4 445 487 A divulgue un dispositif de mélange d'un flux d'air de suralimentation comportant des moyens d'acheminement des gaz d'échappement recirculés dans un collecteur, lesdits moyens d'acheminement réalisés en acier inoxydable.

L'invention vise à fournir un dispositif de ce type dont les gaz d'admission, en sortie du dispositif, présente une température plus homogène à l'entrée dans les différents cylindres de la culasse.

A cet effet, l'invention concerne un dispositif de mélange d'un flux d'air de suralimentation et d'un flux de gaz d'échappement recirculés en vue de leur admission dans la culasse d'un moteur thermique de véhicule automobile, comportant :
- un collecteur permettant le mélange du flux d'air de suralimentation et du flux de gaz d'échappement recirculés, et la répartition du mélange dans la culasse,
- des moyens d'acheminement de gaz d'échappement recirculés dans ledit collecteur permettant l'injection répartie des gaz d'échappement recirculés dans le flux d'air de suralimentation,
ledit dispositif comportant en outre des moyens d'isolation thermique des moyens d'acheminement pour limiter le refroidissement des gaz d'échappement recirculés par l'air de suralimentation, caractérisé en ce que les moyens d'isolation thermique comportent un déflecteur d'air de suralimentation placé en amont desdits moyens d'acheminement dans le sens de circulation de l'air de suralimentation et qui dévie le flux d'air de suralimentation pour qu'il contourne les moyens d'acheminement.

Ainsi, on minimise les échanges thermiques entre les gaz d'échappement recirculés et l'air de suralimentation de façon à favoriser l'injection des gaz d'échappement à une température homogène et donc à homogénéiser la température des gaz d'admission formés du mélange de l'air de suralimentation et des gaz d'échappement recirculés.

Le dispositif selon l'invention permet donc d'obtenir un mélange de gaz admis dans la culasse du moteur présentant une température homogène malgré le positionnement du tube d'injection des gaz d'échappement sur le trajet de l'air de suralimentation refroidi. Autrement dit, il permet d'allier compacité, efficacité et rendement. En outre, le dispositif peut être monté de manière simple et rapide.

Selon des caractéristiques de mise en oeuvre particulièrement simple et commode, tant à la fabrication qu'à l'utilisation :
- les moyens d'acheminement présentent une conductivité thermique inférieure ou égale à 50 W.m⁻¹.K⁻¹, voire inférieure ou égale à 30 W.m⁻¹.K⁻¹ ;
- le déflecteur est d'une pièce avec le collecteur ;
- les moyens d'acheminement sont disposés dans un carter dont la face amont dans le sens de circulation de l'air de suralimentation forme le déflecteur ;
- les moyens d'acheminement comportent un tube à l'intérieur duquel circulent les gaz d'échappement recirculés et qui s'étend transversalement à la direction de circulation de l'air de suralimentation ;
- le tube et le collecteur comportent des moyens de fixation mécanique réciproques ;
- le collecteur est surmoulé sur le tube ;
- le tube comporte une série de trous répartis sur sa longueur ;
- le tube comporte une paroi simple en acier éventuellement inoxydable ;
- le tube comporte une double paroi en aluminium ;
- le tube comporte une double paroi en acier inoxydable ;
- le dispositif comporte en outre un échangeur de chaleur comportant un faisceau d'échange de chaleur pour le refroidissement de l'air de suralimentation.

Les caractéristiques et avantages de l'invention ressortiront de la description qui suit, donnée à titre d'exemple préféré, mais non limitatif, en référence aux dessins annexés, sur lesquels :
- la figure 1 est une vue schématique d'un dispositif selon un premier mode de réalisation de l'invention ;
- la figure 2 est une vue en perspective du tube d'acheminement des gaz d'échappement recirculés du dispositif de la figure 1 ;
- la figure 3 est une vue en perspective-coupe d'un dispositif selon un deuxième mode de réalisation de l'invention ;
- la figure 4 est une vue en perspective-coupe prise dans l'axe du tube du collecteur de la figure 3 ;
- la figure 5 est une vue du détail repéré par V sur la figure 4 ;
- la figure 6 est une vue en perspective-éclatée d'une variante de réalisation du collecteur selon le deuxième mode de réalisation ;
- la figure 7 est une vue similaire à celle de la figure 6, le tube étant monté dans le collecteur.

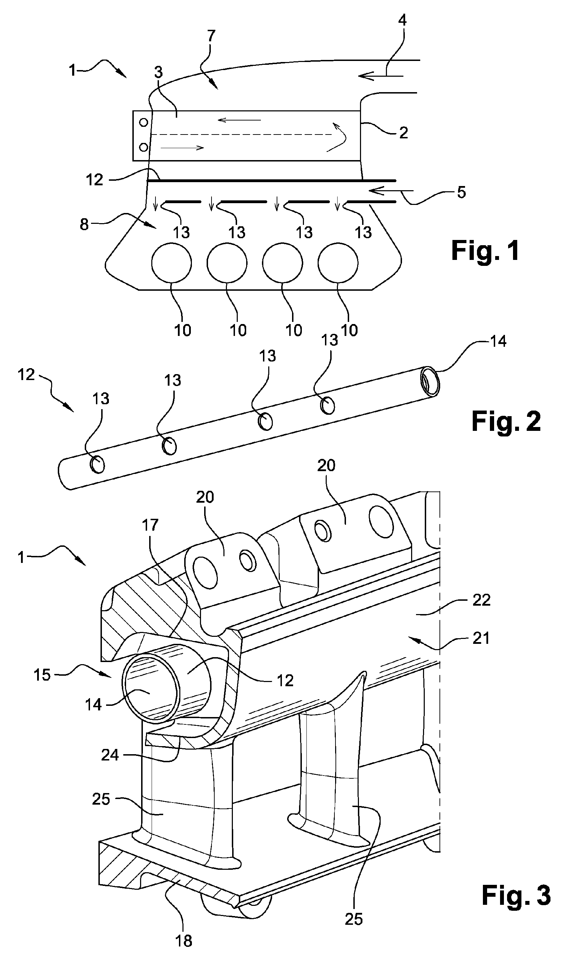

En référence à la figure 1, un dispositif 1 de mélange de gaz dans la culasse d'un moteur thermique de véhicule automobile (non représenté) comporte un échangeur de chaleur 2 comprenant un faisceau d'échange de chaleur 3 agencé pour échanger de la chaleur avec un premier flux de gaz, ici l'air de suralimentation 4 issu du compresseur (non représenté). L'échangeur 2 est ici un refroidisseur d'air de suralimentation (RAS).

Par la suite, on définit les termes « amont » et « aval » par rapport au sens de circulation de l'air de suralimentation dans le dispositif de mélange 1, l'air de suralimentation 4 puis le mélange air de suralimentation 4 / gaz d'échappement recirculés 5 (« EGR ») circulant de l'amont vers l'aval dans le dispositif 1.

L'air de suralimentation est introduit dans l'échangeur de chaleur 2 par un collecteur d'entrée 7, monté en amont de l'échangeur de chaleur 2, et évacué par un collecteur 8, également dénommé collecteur de répartition, monté en aval de l'échangeur de chaleur 2 et destiné à être relié à la culasse du moteur (non représentée).

Le collecteur de répartition 8 est en métal et est monté sur la culasse du moteur. Le collecteur de répartition 8 permet une admission répartie, dans la culasse, des gaz d'admission formés du mélange de l'air de suralimentation et des gaz d'échappement recirculés.

Le collecteur de répartition 8, monté en aval de l'échangeur de chaleur 2, comprend une partie amont avec une face amont, sur laquelle débouche la face de sortie du faisceau 3, et une partie aval destinée à être fixée sur la culasse du moteur. La partie aval du collecteur 8 comprend ici des canaux de sortie 10 agencés pour déboucher respectivement dans les cylindres d'admission du moteur. Ainsi, l'air de suralimentation admis par la face amont du collecteur 8 est réparti dans les canaux de sortie afin d'alimenter les cylindres du moteur en gaz pour leur combustion.

Le collecteur 8 est sensiblement évasé de l'amont vers l'aval.

Le dispositif de mélange 1 comprend en outre des moyens d'injection des gaz EGR 5. Les moyens d'injection comportent un tube cylindrique 12. Le tube d'injection 12 comprend ici un orifice 14 d'entrée des gaz d'échappement recirculés 5 dans le tube 12. Le tube 12 s'étend face à la sortie de l'échangeur 2, transversalement à la direction de circulation de l'air de suralimentation 4. Le tube 12 s'étend ici sur toute la largeur du collecteur 8. Il présente sur son côté aval une série de quatre trous d'injection 13. Ces trous permettent l'injection des gaz EGR 5 dans le flux d'air de suralimentation 4, l'injection étant répartie grâce à la répartition des trous 13 le long du tube 12.

Cela permet aux deux gaz 4, 5 de se mélanger à partir de plusieurs trous d'injection, la concentration des gaz d'échappement recirculés pouvant alors être sensiblement homogénéisée en tout point du mélange. Au niveau de la zone de confluence des deux flux de gaz 4, 5, des turbulences se créent, ce qui favorise l'homogénéisation dudit mélange. Le mélange de gaz 4, 5 admis dans les cylindres du moteur est ainsi plus homogène et les performances de combustion du moteur améliorées.

Il va de soi que la canalisation d'injection pourrait comporter deux orifices d'injection destinés à permettre l'introduction simultanée ou alternée de deux flux de gaz d'échappement recirculés de natures différentes ou identiques. En l'occurrence, les flux de gaz d'échappement recirculés peuvent être refroidis ou non, à haute pression ou basse pression. Une injection de gaz d'échappements recirculés de natures différentes permet de modifier la nature du comburant dans les cylindres du moteur et ainsi de modifier les performances du moteur lors de son fonctionnement à faible charge ou forte charge.

Selon des variantes de réalisation non représentées, le collecteur présente un nombre de trous ou une forme ou des dimensions de trou différents. On peut prévoir une répartition différente des trous sur la surface du tube. Selon d'autres variantes, les moyens d'injection sont formés d'une fente longitudinale.

Comme le tube 12 est positionné en travers du flux d'air de suralimentation 4 refroidi par son passage dans l'échangeur 2, en l'absence de toute précaution, les gaz d'échappement recirculés 5 peuvent être refroidis. Du fait de la géométrie du tube par rapport à la direction de circulation de l'air de suralimentation, plus les gaz d'échappement parcourent de chemin à l'intérieur du tube, plus longtemps ils sont en contact avec la paroi du tube.

Pour leur éviter d'échanger thermiquement avec l'air de suralimentation, on prévoit des moyens d'isolation du tube 12. Dans ce mode de réalisation, c'est le tube 12 lui-même qui joue le rôle de moyens d'isolation grâce à sa structure ou grâce au choix de la matière dont il est formé.

Le tube 12 représenté à la figure 2 comporte une paroi simple en acier inoxydable (inox) dont la conductivité thermique est de 26 W.m⁻¹.K ⁻¹. Cela permet de limiter l'échange de chaleur entre les deux flux de gaz et d'injecter les gaz EGR à la même température quelque soit la distance du trou d'injection 13 à l'entrée 14 en comparaison par exemple avec une paroi simple en aluminium dont la conductivité thermique est de 200 W.m⁻¹.K⁻¹. Les valeurs données ici sont des valeurs approchées qui dépendent notamment de la composition exacte des matières utilisées.

En variante, on peut utiliser de l'acier dont la conductivité thermique est de 46 W.m⁻¹.K⁻¹. Dans une certaine mesure, en fonction des résultats escomptés, on peut également considérer le fer (80 W.m⁻¹.K⁻¹) ou encore la fonte (100 W.m⁻¹.K⁻¹).

Selon une autre variante, la paroi du tube 12 présente une paroi double dont la structure en deux couches séparées par une couche d'air permet d'abaisser de façon notable la conductivité thermique. On peut choisir pour ce faire une double paroi en aluminium dont la conductivité thermique qui est de, en simple couche, 200 W.m⁻¹.K⁻¹ est considérablement abaissée dans cette utilisation en double couche. Alternativement on pourra utiliser de la fonte, du fer, de l'acier et en particulier de l'acier inoxydable. Parmi toutes ces matières, c'est le tube à double paroi en inox qui présente la plus faible conductivité thermique pour une très bonne isolation des gaz EGR.

On s'intéresse maintenant au parcours des gaz. Une partie de l'air de suralimentation 4, lorsqu'il sort de l'échangeur 2, vient contre le tube 12 puis poursuit sa course en aval du tube 12. En aval du tube, l'air de suralimentation 4 se mélange avec les gaz EGR dont la faible conductivité du tube a empêché un refroidissement hétérogène. Le mélange de gaz 4, 5 parvient enfin aux canaux de sortie 10 en présentant une température plus homogène.

Le montage du collecteur 8 étant bien connu et ne faisant pas l'objet de l'invention ne sera pas décrit ici. On notera simplement que le tube 12 peut être monté mécaniquement sur le collecteur en prévoyant les moyens de fixation réciproques nécessaires. On peut autrement prévoir de surmouler le collecteur sur le tube.

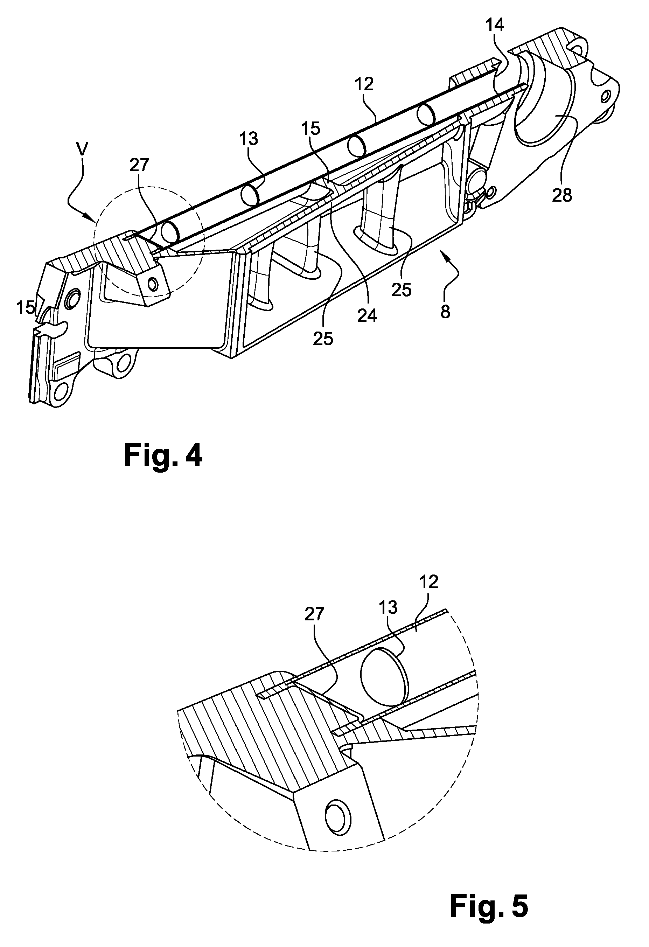

En référence aux figures 3 à 7, on décrit maintenant un deuxième mode de réalisation dans lequel le tube 12 est disposé dans un carter 15. Pour les éléments identiques ou similaires, on garde les mêmes références que pour la description du mode correspondant aux figures 1 et 2. Le collecteur 8 est orienté sur les figures 3 à 7 de telle sorte que le flux d'air de suralimentation circule de droite à gauche, la face que l'on voit sur les figures correspondant à l'amont du tube 12.

Le collecteur présente deux parois opposées 17, 18 entre lesquelles circule le flux d'air de suralimentation. Le collecteur 8 présente un carter 15 dans lequel est disposé le tube 12. Le carter 15 est d'une pièce avec la première paroi 17 du collecteur 8. Le carter 15 s'étend transversalement au flux d'air de suralimentation. De cette paroi 17 partent également les moyens de fixation 20 qui permettent de fixer ensemble le collecteur 8 et la culasse du moteur (non représentée). Ces moyens de fixation sont bien connus et ne seront pas plus décrits ici.

En amont du tube 12 et partant de la paroi 17, s'étend un déflecteur 21, formant les moyens d'isolation, qui protège le tube 12 de l'air de suralimentation et qui détourne cet air du tube 12. Le déflecteur 21 est formé par la face amont du carter 15. Le déflecteur 21 s'étend comme le tube 12 sur toute la largeur du collecteur 8.

Le déflecteur 21 présente un écran 22 de forme rectangulaire et plane s'étendant à l'écart du tube 12 de sorte que l'écran 22 abrite le tube 12 du flux du gaz d'air de suralimentation.

En direction de la deuxième paroi 18, le déflecteur 21 se prolonge sur toute sa longueur par une surface coudée 24 de sorte que le déflecteur 21 s'enroule à distance autour de la face du tube 12 exposée au flux d'air de suralimentation.

Du côté aval du tube 12, le tube 12 est libre de déflecteur 21 et présente ses trous d'injection 13 des gaz EGR.

Une partie de l'air de suralimentation 4, lorsqu'il sort de l'échangeur 2, vient buter sur l'écran 22 du déflecteur 21, le contourne contre la surface coudée 24 puis poursuit sa course en aval du tube 12. En aval du tube, l'air de suralimentation 4 se mélange avec les gaz EGR dont la présence du déflecteur a empêché un refroidissement hétérogène. Le mélange de gaz 4, 5 parvient enfin aux canaux de sortie 10 en présentant une température plus homogène qu'en l'absence de déflecteur 21.

Entre les parois opposées 17, 18, s'étendent des jambages 25 qui participent à la rigidité du collecteur 8. Ils présentent une forme aérodynamique pour limiter leur influence sur l'écoulement de l'air de suralimentation.

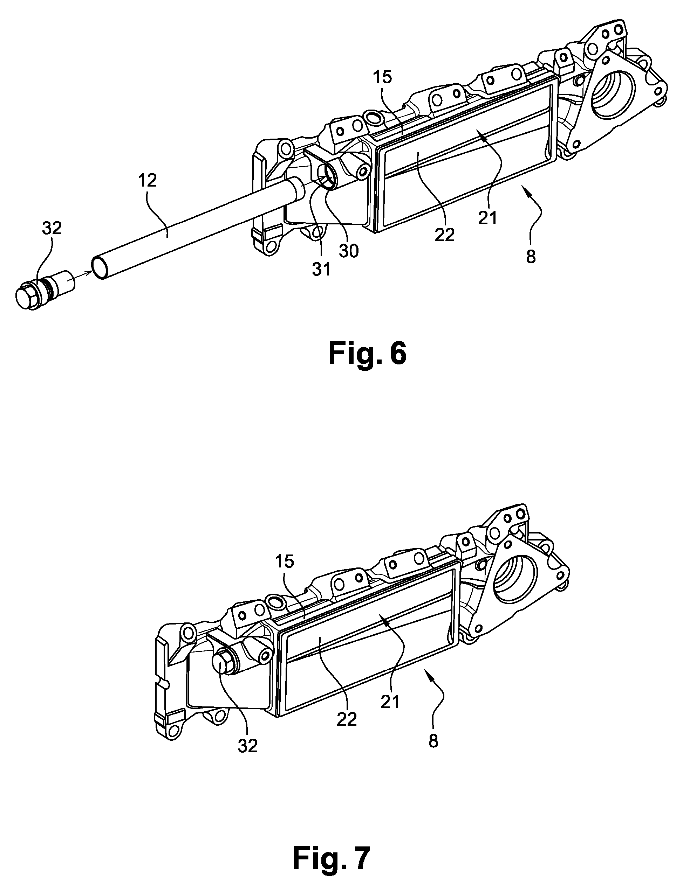

Sur la variante de réalisation représentée aux figures 6 et 7, le collecteur 8 ne présente pas de jambages.

Selon une variante de réalisation non représentée, le déflecteur est rapporté sur le collecteur de sorte que l'on peut choisir la matière dans laquelle est formée le déflecteur, par exemple de l'acier.

On décrit maintenant la fabrication d'un tel collecteur.

En référence aux figures 3 à 5, le dispositif comporte un collecteur 8 surmoulé sur le tube 12. On se procure ou on forme d'abord le tube 12. Le tube est bouché à ses extrémités par des bouchons cylindriques 27. Dans un moule adapté, on place le tube 12 et on injecte le métal pour former le collecteur 8. Ensuite, on perce le tube 12 de trous d'injection 13 et on usine le collecteur pour former une ouverture 28 globalement cylindrique pour relier le tube 12 à une vanne (non représentée) de distribution des gaz d'échappement recirculés dans le tube 12. Selon une variante, on perce le tube 12 avant le moulage et on prévoit des caches sur le moule ou sur le tube pour empêcher le métal de pénétrer dans le tube 12.

En référence aux figures 6 et 7, le dispositif comporte un tube 12 monté mécaniquement dans le carter 15 du collecteur 8. Pour ce faire, on moule le collecteur 8 en prévoyant un passage d'insertion 30 du tube 12 dans le carter 15 et en prévoyant des moyens de fixation 31 sur le passage 30. Les moyens de fixation 31 sont de type trou taraudé, complémentaires d'une vis 32 de fixation. Ensuite on insère le tube 12 percé de trous dans le carter 15 par le passage 30 puis on visse la vis 32 sur les moyens de fixation 30.

Selon une variante des modes de réalisation décrits ci-dessus, on peut prévoir de combiner les différents modes, par exemple, on peut prévoir un tube double paroi en inox dans un carter muni d'un déflecteur.

La présente invention n'est pas limitée aux modes de réalisation décrits et représentés mais englobe toute variante d'exécution. En particulier, on pourra prévoir pour le tube et/ou le déflecteur de les former dans des matières présentant les propriétés adaptées tant en matière de résistance que de conductivité thermique.

## Revendications

1. Dispositif de mélange d'un flux d'air de suralimentation et d'un flux de gaz d'échappement recirculés en vue de leur admission dans la culasse d'un moteur thermique de véhicule automobile, comportant :
- un collecteur (8) permettant le mélange du flux d'air de suralimentation (4) et du flux de gaz d'échappement recirculés (5), et la répartition du mélange dans la culasse,
- des moyens d'acheminement de gaz d'échappement recirculés (12) dans ledit collecteur (8) permettant l'injection répartie des gaz d'échappement recirculés dans le flux d'air de suralimentation,
ledit dispositif comportant en outre des moyens d'isolation thermique des moyens d'acheminement (12) pour limiter le refroidissement des gaz d'échappement recirculés par l'air de suralimentation, **caractérisé en ce que** les moyens d'isolation thermique comportent un déflecteur d'air de suralimentation (21) placé en amont desdits moyens d'acheminement (12) dans le sens de circulation de l'air de suralimentation et qui dévie le flux d'air de suralimentation pour qu'il contourne les moyens d'acheminement (12).

2. Dispositif selon la revendication 1, **caractérisé en ce que** les moyens d'acheminement (12) présentent une conductivité thermique inférieure ou égale à 50 W.m⁻¹.K⁻¹.

3. Dispositif selon la revendication 2, **caractérisé en ce que** les moyens d'acheminement (12) présentent une conductivité thermique inférieure ou égale à 30 W.m⁻¹.K⁻¹.

4. Dispositif selon la revendication 1, **caractérisé en ce que** le déflecteur est d'une pièce avec le collecteur (8).

5. Dispositif selon l'une quelconque des revendications précédentes, **caractérisé en ce que** les moyens d'acheminement (12) sont disposés dans un carter (15) dont la face amont dans le sens de circulation de l'air de suralimentation forme le déflecteur (21).

6. Dispositif selon l'une quelconque des revendications précédentes, **caractérisé en ce que** les moyens d'acheminement comportent un tube (12) à l'intérieur duquel circulent les gaz d'échappement recirculés et qui s'étend transversalement à la direction de circulation de l'air de suralimentation.

7. Dispositif selon la revendication 6, **caractérisé en ce que** le tube (12) et le collecteur (8) comportent des moyens de fixation mécanique réciproques (30, 32).

8. Dispositif selon la revendication 6, **caractérisé en ce que** le collecteur (8) est surmoulé sur le tube (12).

9. Dispositif selon l'une quelconque des revendications 6 à 8, **caractérisé en ce que** le tube (12) comporte une série de trous (13) répartis sur sa longueur.

10. Dispositif selon l'une quelconque des revendications 1 à 9, **caractérisé en ce que** les moyens d'acheminement comportent un tube (12) à l'intérieur duquel circulent les gaz d'échappement recirculés, le tube (12) comportant une paroi simple en acier.

11. Dispositif selon la revendication 10, **caractérisé en ce que** le tube (12) comporte une paroi simple en acier inoxydable.

12. Dispositif selon l'une quelconque des revendications 1 à 9, **caractérisé en ce que** les moyens d'acheminement comportent un tube (12) à l'intérieur duquel circulent les gaz d'échappement recirculés, le tube (12) comportant une double paroi en aluminium.

13. Dispositif selon l'une quelconque des revendications 1 à 9, **caractérisé en ce que** les moyens d'acheminement comportent un tube (12) à l'intérieur duquel circulent les gaz d'échappement recirculés, le tube (12) comportant une double paroi en acier inoxydable.

14. Dispositif selon l'une quelconque des revendications précédentes, **caractérisé en ce qu'**il comporte en outre un échangeur de chaleur (2) comportant un faisceau d'échange de chaleur (3) pour le refroidissement de l'air de suralimentation.

## Patentansprüche

1. Vorrichtung zum Mischen eines Ladeluftstroms und eines Stroms rückgeführter Abgase zu ihrem Einlassen in den Zylinderkopf einer Brennkraftmaschine eines Kraftfahrzeugs, die Folgendes umfasst:
- einen Sammler (8), der das Mischen des Ladeluftstroms (4) und des Stroms rückgeführter Abgase (5) sowie die Verteilung des Gemischs in den Zylinderkopf erlaubt,
- Beförderungsmittel rückgeführter Abgase (12) in dem Sammler (8), die ein verteiltes Einspritzen der rückgeführten Abgase in den Ladeluftstrom erlauben,
wobei die Vorrichtung außerdem Wärmeisolationsmittel der Beförderungsmittel (12) umfasst, um das Abkühlen der rückgeführten Abgase durch die Ladeluft zu begrenzen, **dadurch gekennzeichnet, dass** die Wärmeisolationsmittel Folgendes umfassen:
einen Ladeluftablenker (21), der stromaufwärts der Beförderungsmittel (12) in die Zirkulationsrichtung der Ladeluft platziert ist und den Ladeluftstrom umlenkt, so dass er die Beförderungsmittel (12) umgeht.

2. Vorrichtung nach Anspruch 1, **dadurch gekennzeichnet, dass** die Beförderungsmittel (12) eine Wärmeleitfähigkeit kleiner oder gleich 50 W.m⁻¹ .K⁻¹ aufweisen.

3. Vorrichtung nach Anspruch 2, **dadurch gekennzeichnet, dass** die Beförderungsmittel (12) eine Wärmeleitfähigkeit kleiner oder gleich 30 W.m⁻¹ .K⁻¹ aufweisen.

4. Vorrichtung nach Anspruch 1, **dadurch gekennzeichnet, dass** der Ablenker aus einem Teil mit dem Sammler (8) besteht.

5. Vorrichtung nach einem der vorhergehenden Ansprüche, **dadurch gekennzeichnet, dass** die Beförderungsmittel (12) in einem Gehäuse (15) angeordnet sind, dessen stromabwärtige Seite in die Zirkulationsrichtung der Ladeluft den Ablenker (21) bildet.

6. Vorrichtung nach einem der vorhergehenden Ansprüche, **dadurch gekennzeichnet, dass** die Beförderungsmittel ein Rohr (12) umfassen, in dessen Innerem die rückgeführten Abgase zirkulieren, und das sich quer zu der Zirkulationsrichtung der Ladeluft erstreckt.

7. Vorrichtung nach Anspruch 6, **dadurch gekennzeichnet, dass** das Rohr (12) und der Sammler (8) Mittel zum gegenseitigen mechanischen Befestigen (30, 32) umfassen.

8. Vorrichtung nach Anspruch 6, **dadurch gekennzeichnet, dass** der Sammler (8) auf dem Rohr (12) aufgeformt ist.

9. Vorrichtung nach einem der Ansprüche 6 bis 8, **dadurch gekennzeichnet, dass** das Rohr (12) eine Reihe von Bohrungen (13), die auf seiner Länge verteilt sind, umfasst.

10. Vorrichtung nach einem der Ansprüche 1 bis 9, **dadurch gekennzeichnet, dass** die Beförderungsmittel ein Rohr (12) umfassen, in dessen Innerem die rückgeführten Abgase zirkulieren, wobei das Rohr (12) eine einfache Stahlwandung umfasst.

11. Vorrichtung nach Anspruch 10, **dadurch gekennzeichnet, dass** das Rohr (12) eine einfache Wandung aus rostfreiem Stahl umfasst.

12. Vorrichtung nach einem der Ansprüche 1 bis 9, **dadurch gekennzeichnet, dass** die Beförderungsmittel ein Rohr (12) umfassen, in dessen Innerem die rückgeführten Abgase zirkulieren, wobei das Rohr (12) eine doppelte Wandung aus Aluminium umfasst.

13. Vorrichtung nach einem der Ansprüche 1 bis 9, **dadurch gekennzeichnet, dass** die Beförderungsmittel ein Rohr (12) umfassen, in dessen Innerem die rückgeführten Abgase zirkulieren, wobei das Rohr (12) eine doppelte Wandung aus rostfreiem Stahl umfasst.

14. Vorrichtung nach einem der vorhergehenden Ansprüche, **dadurch gekennzeichnet, dass** sie außerdem einen Wärmeaustauscher (2) umfasst, der ein Wärmeaustauschrohrbündel (3) zum Abkühlen der Ladeluft umfasst.

## Claims

1. Device for mixing a stream of supercharging air and a stream of recirculated exhaust gases with a view to admitting them into the cylinder head of a motor vehicle combustion engine, comprising:
- a manifold (8) allowing the stream of supercharging air (4) and the stream of recirculated exhaust gases (5) to be mixed, and allowing the mixture to be distributed in the cylinder head,
- means (12) for conveying recirculated exhaust gases in said manifold (8) that allow the distributed injection of the recirculated exhaust gases into the stream of supercharging air,
said device additionally comprising means for thermally insulating the conveying means (12) in order to limit the cooling of the recirculated exhaust gases by the supercharging air, **characterized in that** the thermal insulation means comprise a supercharging air deflector (21) placed upstream of said conveying means (12) in the direction of circulation of the supercharging air, said deflector diverting the stream of supercharging air so that it bypasses the conveying means (12).

2. Device according to Claim 1, **characterized in that** the conveying means (12) have a thermal conductivity of less than or equal to 50 W.m⁻¹.K⁻¹.

3. Device according to Claim 2, **characterized in that** the conveying means (12) have a thermal conductivity of less than or equal to 30 W.m⁻¹.K⁻¹.

4. Device according to Claim 1, **characterized in that** the deflector is in one piece with the manifold (8).

5. Device according to one of any of the preceding claims, **characterized in that** the conveying means (12) are arranged in a housing (15) of which the upstream face in the direction of circulation of the supercharging air forms the deflector (21).

6. Device according to any one of the preceding claims, **characterized in that** the conveying means comprise a tube (12) inside which the recirculated exhaust gases circulate and which extends transversely to the direction of circulation of the supercharging air.

7. Device according to Claim 6, **characterized in that** the tube (12) and the manifold (8) comprise reciprocal mechanical fastening means (30, 32).

8. Device according to Claim 6, **characterized in that** the manifold (8) is overmolded on the tube (12).

9. Device according to any one of Claims 6 to 8, **characterized in that** the tube (12) comprises a series of holes (13) distributed over its length.

10. Device according to any one of Claims 1 to 9, **characterized in that** the conveying means comprise a tube (12) inside which the recirculated exhaust gases circulate, the tube (12) comprising a single wall made of steel.

11. Device according to Claim 10, **characterized in that** the tube (12) comprises a single wall made of stainless steel.

12. Device according to any one of Claims 1 to 9, **characterized in that** the conveying means comprise a tube (12) inside which the recirculated exhaust gases circulate, the tube (12) comprising a double wall made of aluminum.

13. Device according to any one of Claims 1 to 9, **characterized in that** the conveying means comprise a tube (12) inside which the recirculated exhaust gases circulate, the tube (12) comprising a double wall made of stainless steel.

14. Device according to any one of the preceding claims, **characterized in that** it additionally comprises a heat exchanger (2) comprising a heat exchange bundle (3) for cooling the supercharging air.
